# EUROPÄISCHE PATENTSCHRIFT

(11) **EP 1 996 414 B1**
(45) Veröffentlichungstag und Bekanntmachung des Hinweises auf die Patenterteilung: **16.06.2010**
(21) Anmeldenummer: 07856268.3
(22) Anmeldetag: 28.11.2007
(51) Int. Cl.: B60C 23/04

(54) **VENTILANORDNUNG UND BAUSATZ FÜR EINE VENTILANORDNUNG**
VALVE ARRANGEMENT AND CONSTRUCTION KIT FOR A VALVE ARRANGEMENT
ENSEMBLE DE VALVE ET KIT POUR UN ENSEMBLE DE VALVE

(30) Priorität: 28.11.2006 DE 102006056470
(43) Veröffentlichungstag der Anmeldung: 03.12.2008
(73) Patentinhaber: Alligator Ventilfabrik GmbH, 89537 Giengen (DE)
(72) Erfinder: PALAORO, Renato, 89518 Heidenheim (DE); GERSTENLAUER, Andreas, 89520 Heidenheim (DE)
(74) Vertreter: Nüsse, Stephan
(86) Internationale Anmeldenummer: PCT/EP2007/010302
(87) Internationale Veröffentlichungsnummer: WO 2008/064869

(56) Entgegenhaltungen:
- DE-A1- 4 106 502
- DE-A1- 19 613 936
- DE-A1-102004 048 244
- US-A1- 2004 206 169

## Beschreibung

Die Erfindung betrifft eine Ventilanordnung mit einem Ventilkörper zum Befüllen und Entleeren eines Fahrzeugreifens und mit einer Messvorrichtung zum Messen des Fahrzeugreifendruckes, bei welcher die Messvorrichtung gegen eine Axialbewegung in einer von dem Ventilkörper weg weisende Zugrichtung an der Messvorrichtung durch ein Sicherungsmittel gesichert ist, wobei das Sicherungsmittel mindestens ein Profilelement mit mindestens einem am Ventilkörper angreifenden Fixierelement aufweist.

Eine Ventilanordnung ist beispielsweise in der EP 0 751 017 B1 beschrieben. Bei der bekannten Ventilanordnung wird das Gehäuse der Messvorrichtung von der Radinnenseite her mittels einer Fixierschraube gegen den Ventilkörper verspannt. Nachteilig hierbei ist der zeitaufwendige Montagevorgang, da die Fixierschraube in einem schlecht zugänglichen Bereich durch eine Gehäuseöffnung der Messvorrichtung geführt und in ein Innengewinde des Ventilkörpers geschraubt werden muss. Ferner ist das hohe Gewicht der Fixierschraube von Nachteil, welches durch entsprechende Auswuchtgewichte ausgeglichen werden muss.

Neben der Fixierung der Messvorrichtung an dem Ventilkörper eines Fahrzeugreifenventils mittels einer Fixierschraube werden Ventilanordnungen eingesetzt, bei denen der Ventilkörper im Spritzgussverfahren partiell von dem Messvorrichtungsgehäuse umschlossen ist und die Messvorrichtung auf diese Weise gegen eine Axialbewegung relativ zu dem Ventilkörper gesichert ist. Diese bekannte Ausführungsform hat im Vergleich zu der zuvor beschriebenen Ausführungsform mit Fixierschraube ein geringeres Gewicht. Nachteilig ist jedoch, dass die bekannte Ventilanordnung vergleichsweise unflexibel einsetzbar ist, da der Ventilkörper bereits bei der Gehäusefertigung der Messvorrichtung an der Messvorrichtung festgelegt werden muss. Zu einem späteren Zeitpunkt, bei der Montage der Ventilanordnung im Fahrzeugrad ist eine Verwendung eines alternativen Ventilkörpers mit der fertigen Messvorrichtung dann nicht mehr möglich.

In DE 10 2006 043 873 A1 ist ebenso wie in ähnlichen Ausführungen der DE 10 2004 048 244 A1, US 2004/0206169 A1 oder DE 196 13 936 A1 ein Ventilkörper an einer Messvorrichtung mittels einem Clip angebracht, welcher erst nach dem Durchstecken des Ventilkörpers durch ein Gehäuse der Messvorrichtung radial zur Ventilkörperachse in einen Einstich des Ventilkörpers eingebracht werden muss - dazu wird beispielsweise ein standardmäßiger C-Clip oder E-Clip auf den Ventilkörper aufgeclipst. Auch dabei besteht ein vergleichsweise zeitaufwändiger Montageaufwand.

EP 1 736 328 A1 offenbart eine Messvorrichtung, deren als Schnappelement ausgebildeter Gehäusevorsatz unter radialer Verbiegung in eine Kragenöffnung des Ventilkörpers eingebracht und hinter dem Kragen eingreifen kann, wobei der Kragen und das Schnappelement aufeinander abgestimmt sind, was die Anordnung nachteiligerweise unflexibel macht.

Der Erfindung liegt daher die Aufgabe zugrunde, eine Ventilanordnung vorzuschlagen, die einerseits flexibel einsetzbar und in verbesserter Weise montierbar ist und bei der andererseits das Sicherungsmittel ein geringes Gewicht aufweist. Ferner besteht die Aufgabe darin, einen Bausatz für eine derartige Ventilanordnung anzugeben.

Diese Aufgabe wird bei einer gattungsgemäßen Ventilanordnung gelöst durch die Merkmale des Anspruchs 1.

Der erfindungsgemäße Bausatz umfasst neben dem Ventilkörper und der Messvorrichtung mindestens ein Profilelement mit mindestens einem Fixierelement zum Angreifen an, d.h. zum Zusammenwirken mit dem Ventilkörper.

Die Montage der Ventilanordnung ist vereinfacht, wenn die Lage des Ventilkörpers im Einbauzustand relativ zu der Messanordnung mit dem Profilelement eindeutig definiert ist. Dies wird bei der Erfindung dadurch realisiert, dass in das Profilelement, insbesondere in den Flächenabschnitt, eine Durchführöffnung eingebracht ist, die im montierten Zustand der Ventilanordnung von dem Ventilkörper durchsetzt wird. Bei der Montage wird die Messanordnung entgegen der Zugrichtung in Montagerichtung mit der Durchführöffnung des Profilelementes auf den Ventilkörper aufgeschoben, wobei das mindestens eine Fixierelement mit dem Ventilkörper verkrallt und/oder verrastet.

Gemäß der Erfindung ist weiter vorgesehen, dass das Fixierelement als relativ zum Ventilkörper radial von dem Profilelement vorstehendes Krallelement ausgebildet ist, wobei das mindestens eine Fixierelement sich an einer entsprechend ausgestalteten Oberfläche des Ventilkörpers verkrallt, d.h. festhält. Das Fixierelement ist bevorzugt in axialer Richtung federnd ausgebildet, um eine Montage, das heißt ein Zusammenstecken des Ventilkörpers und des an der Messvorrichtung festgelegten Profilelements zu ermöglichen.

Der Erfindung liegt der Gedanke zugrunde, das Sicherungsmittel als, vorzugsweise als metallisches Stanz-Biegeteil ausgebildetes Profilelement mit mindestens einem Fixierelement auszubilden, wobei das. Fixierelement unmittelbar am Ventilkörper, die relative Axialposition sichernd, angreift und vorzugsweise an der Messvorrichtung, insbesondere an deren Gehäuse, gehalten bzw. festgelegt ist. Im montierten Zustand ist der Ventilkörper an der Fahrzeugfelge, beispielsweise durch Einziehen eines Dichtungsgummis in eine entsprechende Felgenöffnung und/oder mittels einer Fixiermutter festgelegt. Während des Fahrbetriebs wird die Messvorrichtung aufgrund der wirkenden Fliehkräfte in Richtung auf den Ventilkörper gedrückt. Das mindestens eine Profilelement mit Fixierelement dient zur Sicherung der Messvorrichtung gegen ein Abziehen von dem Ventilkörper entgegen der Montagerichtung, sichert also die Messvorrichtung an dem Ventilkörper in eine Zugrichtung von dem Ventilkörper weg. Aufgrund der erfindungsgemäßen Ausgestaltung des Sicherungsmittels als mindestens ein Profilelement wird mit Vorteil erreicht, dass das Sicherungsmittel, insbesondere im Vergleich mit aus dem Stand der Technik bekannten Fixierschrauben ein geringes Gewicht aufweist, was sich positiv auf das Laufverhalten eines mit einer erfindungsgemäßen Ventilanordnung ausgestatteten Fahrzeugrades auswirkt. Ferner ist die erfindungsgemäße Ventilanordnung flexibel einsetzbar, da die Festlegung der Messvorrichtung nicht unmittelbar bei der Fertigung der Messvorrichtung, insbesondere des Messvorrichtungsgehäuses erfolgen muss, also einer bestimmten Messvorrichtung ein bestimmter Ventilkörper dauerhaft zugeordnet werden muss. Vielmehr kann selbst noch bei der Montage der Ventilanordnung an der Felge entschieden werden, welche Art von Ventilkörper der Messvorrichtung zugeordnet werden soll. Hierdurch werden unter anderem die Lagerhaltungskosten reduziert, da nicht eine Vielzahl unterschiedlicher, fertig konfektionierter Ventilanordnungen mit unterschiedlichen Ventilkörpern vorgehalten werden müssen.

Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmale.

Um ein Profilelement mit einem möglichst geringen Gewicht zu erhalten, ist in Weiterbildung der Erfindung mit Vorteil vorgesehen, dass das Profilelement im Wesentlichen scheibenförmig, das heißt möglichst flach ausgebildet ist. Unter scheibenförmig soll auch ein Profilelement verstanden werden, bei dem das mindestens eine Fixierelement aus der Scheibenebene ausgelenkt ist.

Alternativ dazu ist es denkbar, das Profilelement dreidimensional auszubilden, mit einem von einem im Wesentlichen quer zur Zugrichtung angeordneten Flächenabschnitt und einem von diesem Flächenabschnitt sich in im Wesentlichen axialer Richtung erstreckenden Wandabschnitt, an den wiederum ein in radialer Richtung abgewinkelter Haltekragen anschließt. Ein derartig ausgestattetes Profilelement lässt sich vorteilhaft in ein Messvorrichtungsgehäuse, insbesondere in eine in diesem eingebaute Vertiefung einpassen, wobei der Haltekragen einen Hintergriff im Messvorrichtungsgehäuse bildet und somit das Profilelement an der Messvorrichtung gegen ein axiales Verschieben relativ zu der Messvorrichtung sichert.

Von besonderem Vorteil ist es, das Profilelement an der Messvorrichtung gegen ein Verdrehen zu sichern. Dies kann beispielsweise dadurch realisiert werden, dass das Profilelement eine Mehrkantkontur aufweist, die in einer entsprechenden, zumindest abschnittsweise formkongruenten Ausnehmung innerhalb der Messvorrichtung, insbesondere innerhalb des Gehäuses der Messvorrichtung aufgenommen ist. Zusätzlich oder alternativ ist es möglich, die Messvorrichtung gegen ein Verdrehen relativ zu dem Ventilkörper zu sichern, beispielsweise in dem der Ventilkörper mit einem Mehrkantabschnitt ausgestattet ist, der zumindest abschnittsweise formkongruent in der Messvorrichtung aufgenommen ist.

Zusätzlich zur Ausbildung des Fixierelementes als Krallelement kann das Fixierelement als einfaches Rastelement ausgebildet werden, welches mit mindestens einem entsprechenden Rastvorsprung an der Außenseite des Ventilkörpers formschlüssig rastend zusammenwirkt und nicht zwangsweise eine Klemmkraft in radialer Richtung auf den Ventilkörper ausüben muss.

Es ist bevorzugt, wenn die Sicherungswirkung des Fixierelementes, insbesondere des Krallelementes durch eine in radialer Richtung auf den Ventilkörper wirkenden Klemmkraft unterstützt wird.

Eine optimale Sicherungswirkung des Profilelementes kann in Weiterbildung der Erfindung dadurch erreicht werden, dass das mindestens eine Fixierelement gegenüber einer senkrecht zur Längsachse des Ventilkörpers verlaufenden Ebene abgewinkelt, das heißt geneigt bzw. gebogen. Vorzugsweise ist das mindestens eine Fixierelement in der Zugrichtung, das heißt in der Demontagerichtung, also entgegen der Montagerichtung abgewinkelt und stemmt sich damit also gegen die Zugrichtung der Messvorrichtung und verhindert somit ein Abziehen der Messvorrichtung im montierten Zustand der Ventilanordnung von dem Ventilkörper. Durch die abgewinkelte Anordnung der Fixierelemente kann sowohl eine federnde Wirkung in axialer Richtung, als auch eine federnde Wirkung in radialer Richtung, also eine Klemmkraftbeaufschlagung auf den Ventilkörper in radialer Richtung realisiert werden.

Die Sicherung der Messvorrichtung an dem Ventilkörper kann auf zwei grundsätzlich unterschiedliche Arten erfolgen. Zum einen ist es denkbar, die Messvorrichtung mittels des Fixierelementes unlösbar an dem Ventilkörper zu sichern. Zu diesem Zweck wirkt das, insbesondere als Krallelement ausgebildete Fixierelement kraft- und/oder formschlüssig mit einer rauen Ventilkörperoberfläche und/oder mit mindestens einer, vorzugsweise mehreren parallelen Umfangsrillen am Außenumfang des Ventilkörpers zusammen. Unter "unlösbar" ist dabei zu verstehen, dass das Profilelement zum Trennen der Messvorrichtung von dem Ventilkörper beschädigt oder gewaltsam verbogen werden müsste.

Zum anderen ist es denkbar, die Messvorrichtung mittels des Fixierelementes lösbar an dem Ventilkörper zu sichern, um eine Demontage der Ventilanordnung zu ermöglichen. Hierzu ist es denkbar, dass das Fixierelement mit einem Ventilkörperaußengewinde zusammenwirkt, so dass die Messvorrichtung zwar in axialer Richtung entgegen der Zugrichtung auf den Ventilkörper aufgeschoben werden kann, jedoch bei Bedarf durch Verdrehen in Umfangsrichtung relativ zu dem Ventilkörper von dem Ventilkörper wieder gelöst werden kann. Ein einfaches Abziehen axial in Zugrichtung wird von dem mindestens einen Fixierelement, das in das Ventilkörperaußengewinde eingreift mit Vorteil verhindert.

Um die Sicherungswirkung des mindestens einen, vorzugsweise des ausschließlich einen Profilelementes zu erhöhen, ist in Ausgestaltung der Erfindung vorgesehen, dass das Profilelement mehrere Fixierelement, insbesondere Krallelemente aufweist, die mit Ventilkörper zusammenwirken. Dabei ist eine Ausführungsform bevorzugt, bei der die Fixierelemente in Umfangsrichtung, vorzugsweise die Durchführöffnung in dem Profilelement außen begrenzend, angeordnet sind.

Bevorzugt ist eine Ausführungsform, bei der das Profilelement aus Metall ausgebildet ist. Es bietet sich hierbei die Ausbildung als als Massenprodukt herstellbares Stanz-Biegeteil an.

Die Messvorrichtung weist mindestens einen Sensor zur Detektion des Reifendruckes auf, wobei der Sensor mit einer Messvorrichtungselektronik verbunden ist, die das, insbesondere elektronisch aufbereitete Messergebnis an eine von der Messanordnung und dem Fahrzeugrad beabstandete Empfangseinrichtung sendet. Bevorzugt ist eine Ausführungsform bei der der Ventilkörper Teil einer Antenne zum Senden der Signale an die Empfangseinrichtung ist bzw. bei der der Ventilkörper die Antenne bildet. Hierzu muss der Ventilkörper signalleitend mit der Messvorrichtungselektronik, insbesondere mit einem Platinenkontakt der Messvorrichtungselektronik verbunden werden. Vorteilhaft ist es, wenn das Profilelement diese Funktion übernimmt. In diesem Fall hat das Profilelement eine Doppelfunktion. Zum einen dient es zur Sicherung der Messvorrichtung an dem Ventilkörper gegen ein axiales Verschieben und zum anderen verbindet es den Ventilkörper (Antenne) signalleitend mit der Messvorrichtungselektronik.

Zur Kontaktierung der Messvorrichtungselektronik, ist in Weiterbildung der Erfindung mindestens ein Kontaktpin an dem Profilelement vorgesehen, der vorzugsweise im Bereich des Haltekragens angeordnet ist.

Der erfindungsgemäße Bausatz zeichnet sich dadurch aus, dass dieser besonders flexibel zusammensetzbar ist, insbesondere dahingehend, dass dem Bausatz für unterschiedliche Anwendungszwecke unterschiedlich ausgestaltete Ventilkörper zugeordnet werden können, die bevorzugt mit derselben Art von Messvorrichtungen montierbar sind:

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Es zeigen
- Fig. 1:: eine erste perspektivische teilgeschnittene An- sicht einer Ventilanordnung,
- Fig. 2:: eine zweite teilgeschnittene perspektivische An- sicht einer Ventilanordnung aus einem anderen Be- trachtungswinkel und
- Fig. 3:: eine perspektivische Ansicht eines Profilelemen- tes mit einer Vielzahl von ringförmig angeordne- ten als Krallelemente ausgebildeten Fixierelemen- ten.

In den Figuren sind gleiche Bauteile und Bauteile mit der gleichen Funktion mit den gleichen Bezugszeichen gekennzeichnet.

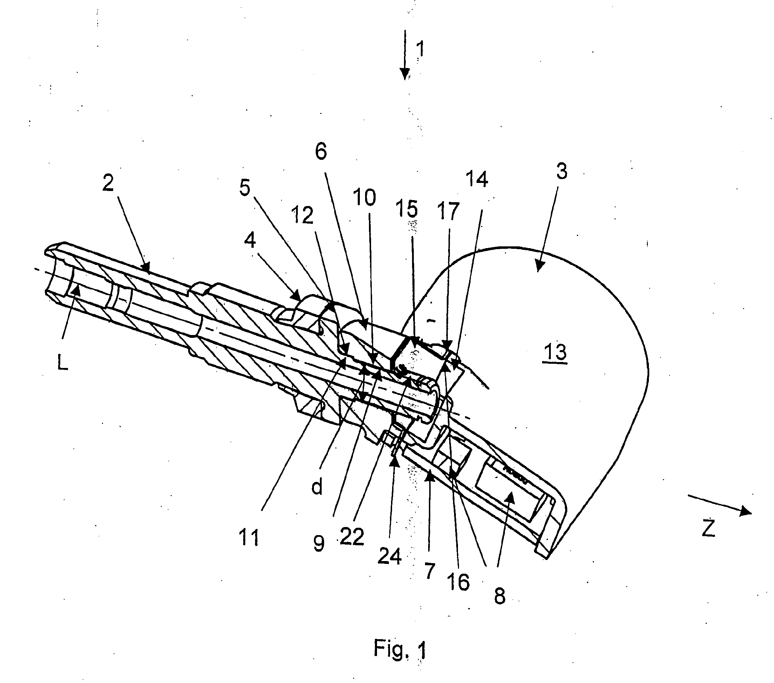

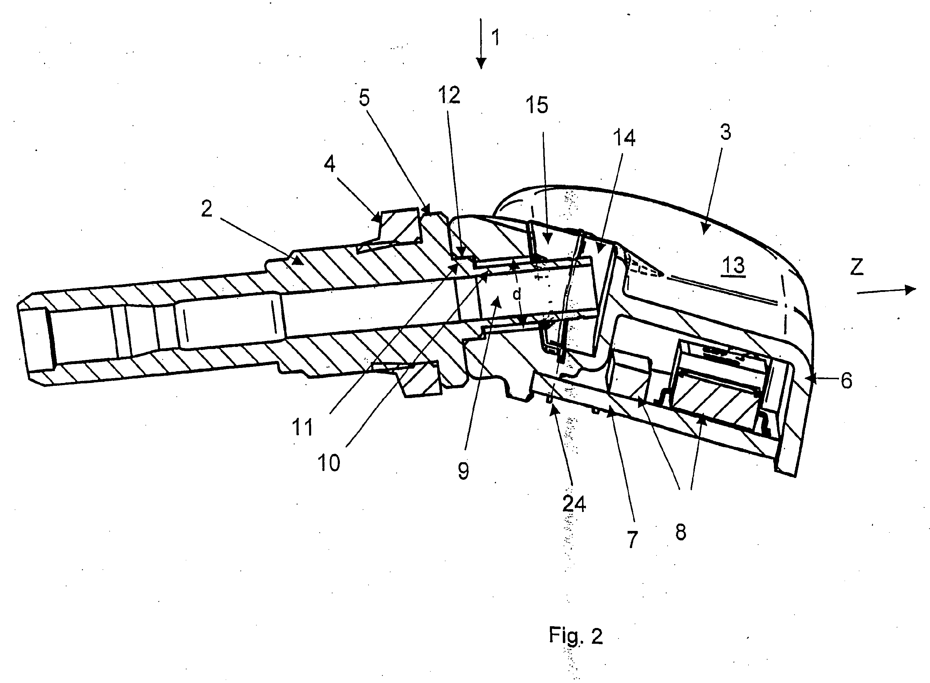

In den Fig. 1 und 2 ist eine Ventilanordnung 1 dargestellt. Die Ventilanordnung 1 besteht im Wesentlichen aus einem Ventilkörper 2, dessen an sich bekanntes Innenleben in den Figuren aus Übersichtlichkeitsgründen nicht dargestellt ist und einer Messanordnung 3 zur Messung des Gasdruckes in einem Fahrzeugreifen.

Im montierten Zustand ist der Ventilkörper 2 an einer nicht dargestellten Fahrzeugfelge festgelegt. Bei dem gezeigten Ventilkörper 2 erfolgt dies durch Hindurchführen des Ventilkörpers 2 durch eine entsprechende Öffnung in der Fahrzeugfelge und Einziehen einer am Außenumfang des Ventilkörpers angeordneten Ringdichtung in die Felgenöffnung. Die Ringdichtung 4 stützt sich dabei in axialer Richtung an einer Umfangsschulter 5 des Ventilkörpers 2 ab. Von der Felgenaußenseite her wird der Ventilkörper 2 mittels einer nicht gezeigten Mutter gesichert, die auf ein Außengewinde des Ventilkörpers aufgeschraubt ist.

Mit einer der Ringdichtung 4 gegenüberliegenden Seite der Umfangsschulter 5 liegt der Ventilkörper 2 an einem als Spritzgussteil hergestellten Kunststoffgehäuse 6 der Messvorrichtung 3 an. Das Kunststoffgehäuse 6 umgibt schützend eine auf einer Platine 7 angeordnete Messvorrichtungselektronik 8 mit Drucksensor.

Der Ventilkörper 2 ist mit einem hinteren Abschnitt 9 durch einen gestuften Aufnahmekanal 10 im Kunststoffgehäuse 6 der Messvorrichtung 3 hindurch geführt, wobei ein Vierkantabschnitt 11 des hinteren Abschnittes 9 formkongruent von einem vorderen Aufnahmekanalabschnitt 12 umschlossen ist und somit eine Verdrehsicherung bildet.

In das Kunststoffgehäuse 6 ist eine von einer Oberseite 13 des Kunststoffgehäuses 6 her zugängliche Vertiefung 14 eingeformt, wobei der hintere Abschnitt 9 des in diesem Bereich zylindrischen Ventilkörpers mit seinem freien Endbereich durch den Aufnahmekanal 10 in die Vertiefung 14 hineinragt. In der Vertiefung 14 ist ein Profilelement 15 aufgenommen, das als Sicherungsmittel zur Sicherung der Messvorrichtung 3 gegen ein Abziehen in eine axiale Zugrichtung Z von dem Ventilkörper 2 dient. Hierzu ist das als Stanz-biegeteil ausgebildete Profilelement 15 innerhalb der Vertiefung 14 an dem Kunststoffgehäuse 6 festgelegt. Es stützt sich mittels eines in radialer Richtung weisenden Haltekragens 16, der in eine entsprechende Radialnut 17 im Kunststoffgehäuse 6 eingreift, in axialer Richtung am Kunststoffgehäuse 6 ab.

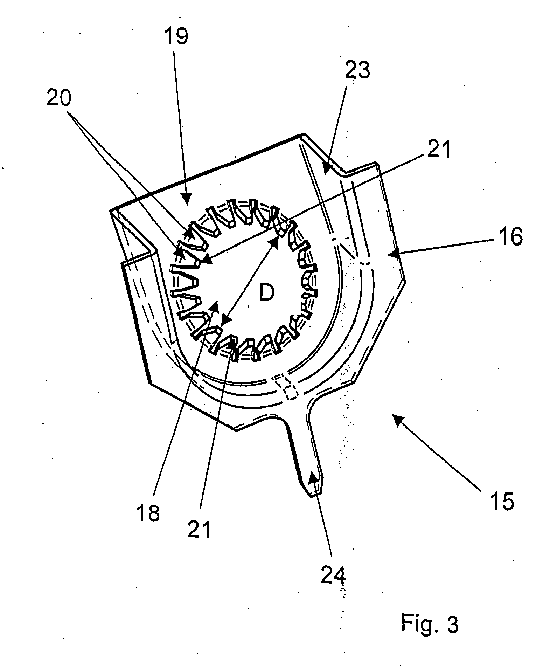

Das metallische Profilelement 15 ist in Fig. 3 im Detail dargestellt. Zu erkennen ist eine zentrische Durchführöffnung 18 innerhalb einer vorderen Anlagefläche 19 (Flächenabschnitt). Wie sich insbesondere aus den Fig. 1 und 2 ergibt, ist das Profilelement 15 derart angeordnet, dass die Anlagefläche 19 sich quer zu einer Längsachse L des Ventilkörpers 2 und damit quer zur Zugrichtung L erstreckt.

Die Durchführöffnung 18 wird umfänglich begrenzt von einer Vielzahl von gleichmäßig über den Umfang der Durchführöffnung 18 verteilten, als Krallelemente ausgebildeten Fixierelementen 20, die in Zugrichtung Z, das heißt entgegen der Montagerichtung gegenüber der Anlagefläche 19 abgewinkelt sind. Bei der Montage werden der Ventilkörper 2 und die Messvorrichtung 8 derart entgegen der Zugrichtung Z relativ zueinander bewegt, dass der hintere Abschnitt 9 des Ventilkörpers 2 durch die Durchführöffnung 18 verschoben wird. Dabei liegen die laschenartigen Fixierelemente 20 vor der Durchführung des Ventilkörpers 2 durch die Durchführöffnung 18 mit ihren freien Enden 21 auf einem Umfangskreis, dessen Durchmesser D geringer ist als der Außendurchmesser d des hinteren Abschnitts 9 des Ventilkörpers 2, so dass die in axialer und radialer Richtung federnd ausgebildeten Fixierelemente 20 beim Durchschieben des Ventilkörpers 2 durch die Durchführöffnung geringfügig nach außen gedrückt werden und somit eine Klemmkraft in radialer Richtung nach innen auf eine Ventilkörperoberfläche 22 ausüben. Die Ventilkörperoberfläche 22 ist aufgeraut (aus Übersichtlichkeitsgründen nicht dargestellt), so dass die an der Ventilkörperoberfläche 22 angreifenden Fixierelemente 20 sich gegen eine Zugkraftbeaufschlagung in Zugrichtung Z auf die Messvorrichtung 3 an der rauen Ventilkörperoberfläche abstützen, sich also gegen eine Zugkraftbeaufschlagung stemmen, wodurch wiederum ein Verschieben der Messvorrichtung 3 entgegen der Montagerichtung in Zugrichtung Z unterbunden wird.

Anstelle einer aufgerauten Oberfläche kann auch mindestens eine Umfangsrille in die Ventilkörperoberfläche 22 eingebracht werden. Bevorzugt sind mehrere in axialer Richtung beabstandete Umfangsrillen vorgesehen. Zur lösbaren Befestigung kann in die Ventilkörperoberfläche 22 ein Außengewinde eingebracht werden, wobei in diesem Fall auf den Vierkantabschnitt 11 verzichtet werden sollte, um die Messvorrichtung 3 in Umfangsrichtung relativ zu dem Ventilkörper 2 verdrehen und damit in Zugrichtung Z ablösen zu können.

Wie insbesondere aus Fig. 3 hervorgeht, schließt an die Anlagefläche 19 des Profilelementes 15 ein sich in axialer Richtung erstreckender Wandabschnitt 23 an, der in einem oberen Bereich eine größere axiale Erstreckung hat als in einem unteren Bereich, so dass eine gedachte, durch den an den axialen Wandabschnitt 23 anschließenden radialen Haltekragen 16 verlaufende Ebene mit der Haltefläche 19 einen Winkel einschließt, wobei diese gedachte Ebene in etwa senkrecht zu der Platine 7 mit der Messvorrichtungselektronik 8 und senkrecht zur Oberseite 13 des Kunststoffgehäuses verläuft. Der axiale Wandabschnitt 23 ist nicht umfangsgeschlossen, sondern das Profilelement 15 ist in einem oberen Bereich offen. In einem unteren Bereich ist der axial verlaufende Wandabschnitt 23 halbkreisförmig gebogen ausgebildet und koaxial zur Durchführungsöffnung 18 angeordnet.

Der Haltekragen 16 ist mehrkantig konturiert und bildet zusammen mit der formkongruenten Radialnut 17 eine Verdrehsicherung für das Profilelement 15, welches bei seiner Montage von oben in die Vertiefung 14 eingeschoben wird.

Der Haltekragen 16 ist in einem unteren Abschnitt einstückig mit einem Kontaktpin 24 ausgebildet, der zur Kontaktierung der auf der Platine 7 angeordneten Messvorrichtungselektronik 8 dient. Zu diesem Zweck ist der Kontaktpin 24 durch die Platine 7 hindurchgeführt und mit einer nicht näher dargestellten Leiterbahn signalleitend verbunden, insbesondere verlötet. Über den Kontaktpin 24 ist der Ventilkörper 2 signalleitend mit der Messvorrichtungselektronik 8 verbunden und dient als Antenne zum Senden von Messsignalen an eine nicht dargestellt Empfangseinrichtung der Ventilanordnung.

## Patentansprüche

1. Ventilanordnung (1) mit einem Ventilkörper (2) zum Befüllen und Entleeren eines Fahrzeugreifens und mit einer Messvorrichtung (3) zum Messen des Fahrzeugreifendruckes, bei welcher die Messvorrichtung (3) gegen eine Axialbewegung in eine von dem Ventilkörper (2) weg weisende Zugrichtung (Z) an dem Ventilkörper (2) durch ein Sicherungsmittel gesichert ist, wobei das Sicherungsmittel ein Profilelement (15) mit einem am Ventilkörper (2) angreifenden Fixierelement (20) aufweist,
**dadurch gekennzeichnet, dass**
der Ventilkörper eine Durchführöffnung (18) des Profilelements (15) durchsetzend angeordnet ist, wobei das Fixierelement (20) als relativ zum Ventilkörper (2) radial vorstehendes an einer Oberfläche des Ventilkörpers (2) verkralltes Krallelement ausgebildet ist.

2. Ventilanordnung nach Anspruch 1, **dadurch gekennzeichnet, dass** das Profilelement (15) im Wesentlichen scheibenförmig ausgebildet ist.

3. Ventilanordnung nach Anspruch 1, **dadurch gekennzeichnet, dass** das Profilelement (15) einen gegenüber einem sich im Wesentlichen in axialer Richtung erstreckenden Wandabschnitt (23) in radialer Richtung abgewinkelten Haltekragen (16) aufweist.

4. Ventilanordnung nach einem der vorhergehenden Ansprüche, **dadurch gekennzeichnet, dass** das Profilelement (15) derart ausgebildet und/oder angeordnet ist, dass es an der Messvorrichtung (3), insbesondere an einem Gehäuse (6) der Messvorrichtung, (3) gegen ein Verdrehen gesichert ist.

5. Ventilanordnung nach einem der vorhergehenden Ansprüche, **dadurch gekennzeichnet, dass** das Fixierelement (20) als ein in axialer Richtung federndes Krallelement ausgebildet ist.

6. Ventilanordnung nach einem der vorhergehenden Ansprüche, **dadurch gekennzeichnet, dass** das Fixierelement (20) eine Klemmkraft in radialer Richtung auf den Ventilkörper (2) ausübend angeordnet und/oder ausgebildet ist.

7. Ventilanordnung nach einem der vorhergehenden Ansprüche, **dadurch gekennzeichnet, dass** das Fixierelement (20) als ein Laschenelement ausgebildet ist.

8. Ventilanordnung nach einem der vorhergehenden Ansprüche, **dadurch gekennzeichnet, dass** das Fixierelement (20) gegenüber einer senkrecht zu einer Längsachse (L) des Ventilkörpers (2) verlaufenden Ebene, insbesondere in die Zugrichtung (Z), abgewinkelt ist.

9. Ventilanordnung nach einem der vorhergehenden Ansprüche, **dadurch gekennzeichnet, dass** das Fixierelement (20) unlösbar mit dem Ventilkörper (2), insbesondere mit einer rauen Ventilkörperoberfläche (22) und/oder mit mindestens einer Umfangrille, kraft- und/oder formschlüssig zusammenwirkend angeordnet und/oder ausgebildet ist.

10. Ventilanordnung nach einem der Ansprüche 1 bis 8, **dadurch gekennzeichnet, dass** das Fixierelement (3) lösbar mit dem Ventilkörper (2), insbesondere mit einem Ventilkörperaußengewinde, kraft- und/oder formschlüssig zusammenwirkend angeordnet und/oder ausgebildet ist.

11. Ventilanordnung nach einem der vorhergehenden Ansprüche, **dadurch gekennzeichnet, dass** das Profilelement (15) mehrere in Umfangsrichtung beabstandete Fixierelemente (20) aufweist.

12. Ventilanordnung nach Anspruch 11, **dadurch gekennzeichnet, dass** die Fixierelemente (20) in Umfangsrichtung gleichmäßig verteilt angeordnet sind.

13. Ventilanordnung nach einem der vorhergehenden Ansprüche, **dadurch gekennzeichnet, dass** das Profilelement (15) aus Metall, insbesondere als Stanz-Biegeteil, ausgebildet sind.

14. Ventilanordnung nach einem der vorhergehenden Ansprüche, **dadurch gekennzeichnet, dass** der Ventilkörper (2) eine Antenne der Messvorrichtung (3) zur Übertragung von Signalen an einen mit Abstand zu dem Gasreifen angeordnete Empfangseinrichtung bildet, und dass das Profilelement (15) ein Kontaktierungselement zur signalleitenden Kontaktierung einer, insbesondere auf einer Platine (7) angeordneten, Messvorrichtungselektronik (8) mit dem Ventilkörper (2) bildet.

15. Ventilanordnung nach Anspruch 13, **dadurch gekennzeichnet, dass** das Kontaktierungselement als mindestens ein Kontaktpin (24) ausgebildet ist.

16. Bausatz für eine Ventilanordnung nach einem der vorhergehenden Ansprüche, mit einem Ventilkörper (2) zum Befüllen und Entleeren eines Fahrzeugreifens und einer Messvorrichtung (3) zum Messen des Fahrzeugreifendrucks in dem Fahrzeugreifen sowie mit einem Sicherungsmittel, aufweisend ein Profilelement (15) mit einem Fixierelement (20) zum Angreifen an dem Ventilkörper (2),
**dadurch gekennzeichnet, dass**
das Fixierelement (20) als relativ zum Ventilkörper (2) radial vorstehendes an einer Oberfläche des Ventilkörpers (2) verkrallbares Krallelement ausgebildet ist.

17. Bausatz nach Anspruch 16, **dadurch gekennzeichnet, dass** das Profilelement sich in axialer Richtung an der Messvorrichtung, insbesondere an deren Gehäuse (6), abstützend anordnenbar ist.

18. Bausatz nach einem der Ansprüche 16 oder 17, **dadurch gekennzeichnet, dass** der Ventilkörper (2) in axialer Richtung entgegen der Zugrichtung (Z) durch das Profilelement (15) hindurchführbar ist und die Messvorrichtung (3) von dem Fixierelement (20) des Profilelementes (15) bei einer Zugkraftbeaufschlagung in die Zugrichtung (2) in ihrer Axialposition gehalten wird.

19. Verwendung eines Bausatzes nach einem der Anspruch 16 bis 18 zur Montage einer Ventilanordnung (1).

## Claims

1. Valve assembly (1), comprising a valve member (2) for filling and emptying a vehicle tyre and comprising a measuring device (3) for measuring the vehicle tyre pressure, in which a locking means prevents the measuring device (3) from performing an axial movement on the valve member (2) in a pulling direction (Z) pointing away from the valve member (2), the locking means comprising a profile member (15) having a fixing member (20) which engages on the valve member (2), **characterised in that** the valve member is arranged penetrating through a feed opening (18) in the profile member (15), the fixing member (20) being in the form of a claw member projecting radially relative to the valve member (2) and gripping onto a surface of the valve member (2).

2. Valve assembly according to claim 1, **characterised in that** the profile member (15) is substantially disc-shaped.

3. Valve assembly according to claim 1, **characterised in that** the profile member (15) comprises a holding collar (16) angled in a radial direction relative to a wall portion (23) which extends substantially in the axial direction.

4. Valve assembly according to any one of the preceding claims, **characterised in that** the profile member (15) is configured and/or arranged in such a way as to be prevented from rotating on the measuring device (3), in particular on a housing (6) of the measuring device (3).

5. Valve assembly according to any one of the preceding claims, **characterised in that** the fixing member (20) is in the form of a claw member sprung in the axial direction.

6. Valve assembly according to any one of the preceding claims, **characterised in that** the fixing member (20) is arranged and/or configured in such a way as to exert a clamping force on the valve member (2) in the radial direction.

7. Valve assembly according to any one of the preceding claims, **characterised in that** the fixing member (20) is in the form of a strip member.

8. Valve assembly according to any one of the preceding claims, **characterised in that** the fixing member (20) is angled, in particular in the pulling direction (Z), relative to a plane extending perpendicular to a longitudinal axis (L) of the valve member (2).

9. Valve assembly according to any one of the preceding claims, **characterised in that** the fixing member (20) is arranged and/or configured so as to cooperate, in an unreleasable positive and/or non-positive fit, with the valve member (2), in particular with a rough valve member surface (22) and/or with at least one circumferential groove.

10. Valve assembly according to any one of claims 1 to 8, **characterised in that** the fixing member (3) is arranged and/or configured so as to cooperate, in a releasable positive and/or non-positive fit, with the valve member (2), in particular with a valve member external thread.

11. Valve assembly according to any one of the preceding claims, **characterised in that** the profile member (15) comprises a plurality of fixing members (20) which are spaced apart in the circumferential direction.

12. Valve assembly according to claim 11, **characterised in that** the fixing members (20) are distributed evenly in the circumferential direction.

13. Valve assembly according to any one of the preceding claims, **characterised in that** the profile member (15) is made of metal, in particular as a stamped and bent metal part.

14. Valve assembly according to any one of the preceding claims, **characterised in that** the valve member (2) forms an aerial of the measuring device (3) for transmitting signals to a receiving device arranged at a distance from the gas-filled tyre, and **in that** the profile member (15) forms a contacting member for placing an electronic measuring device (8), in particular arranged on a circuit board (7), in signal-transmitting contact with the valve member (2).

15. Valve assembly according to claim 13, **characterised in that** the contacting member is in the form of at least one contact pin (24).

16. Kit for a valve assembly according to any one of the preceding claims, comprising a valve member (2) for filling and emptying a vehicle tyre and comprising a measuring device (3) for measuring the vehicle tyre pressure in the vehicle tyre, as well as comprising a locking means in turn comprising a profile member (15) having a fixing member (20) for engaging on the valve member (2), **characterised in that** the fixing member (20) is in the form of a claw member projecting radially relative to the valve member (2) and able to grip onto a surface of the valve member (2).

17. Kit according to claim 16, **characterised in that** the profile member can be arranged so as to be supported in the axial direction on the measuring device, in particular on the housing (6) thereof.

18. Kit according to either claim 16 or claim 17, **characterised in that** the valve member (2) can be passed through the profile member (15) in the axial direction opposed to the pulling direction (Z), and the measuring device (3) is held in the axial position thereof by the fixing member (20) of the profile member (15) when a pulling force is applied in the pulling direction (2).

19. Use of a kit according to any one of claims 16 to 18 for assembling a valve assembly (1).

## Revendications

1. Ensemble de valve (1), avec un corps de valve (2), pour remplir et vider un pneu de véhicule et avec un dispositif de mesure (3), pour mesurer la pression de pneu de véhicule, pour lequel le dispositif de mesure (3) est assuré contre tout déplacement axial dans un sens de traction (Z) s'écartant du corps de valve (2), sur le corps de valve (2), à l'aide d'un moyen de sécurité, le moyen de sécurité présentant un élément profilé (15) avec un élément de fixation (20) agissant sur le corps de valve (2),
**caractérisé en ce que**
le corps de valve est disposé en traversant une ouverture de passage (18) de l'élément profilé (15), l'élément de fixation (20) étant réalisé sous forme d'élément formant griffe (20), faisant saillie radialement par rapport au corps de valve (2), agrippé à une surface du corps de valve (2).

2. Ensemble de valve selon la revendication 1, **caractérisé en ce que** l'élément profilé (15) est réalisé sensiblement en forme de disque.

3. Ensemble de valve selon la revendication 1, **caractérisé en ce que** l'élément profilé (15) présente une collerette de maintien (16) coudée en direction radiale par rapport à un tronçon de paroi (23) s'étendant sensiblement en direction axiale.

4. Ensemble de valve selon l'une des revendications précédentes, **caractérisé en ce que** l'élément profilé (15) est réalisé et/ou disposé de manière qu'il soit assuré au dispositif de mesure (3), en particulier à un boîtier (6) du dispositif de mesure (3), de manière à empêcher toute rotation.

5. Ensemble de valve selon l'une des revendications précédentes, **caractérisé en ce que** l'élément de fixation (20) est réalisé sous forme d'un élément formant griffe présentant une élasticité en direction axiale.

6. Ensemble de valve selon l'une des revendications précédentes, **caractérisé en ce que** l'élément de fixation (20) est réalisé et/ou disposé en exerçant une force de serrage en direction radiale sur le corps de valve (2).

7. Ensemble de valve selon l'une des revendications précédentes, **caractérisé en ce que** l'élément de fixation (20) est réalisé sous forme d'un élément formant patte.

8. Ensemble de valve selon l'une des revendications précédentes, **caractérisé en ce que** l'élément de fixation (20) est coudé, en particulier dans la direction de traction (Z), par rapport à un plan s'étendant perpendiculairement à un axe longitudinal (L) du corps de valve (2).

9. Ensemble de valve selon l'une des revendications précédentes, **caractérisé en ce que** l'élément de fixation (20) est réalisé et/ou disposé de manière indésolidarisable avec le corps de valve (2), en particulier en coopérant, par une liaison à interaction de forces et/ou une liaison à ajustement de forme, avec une surface de corps de valve (22) rugueuse et/ou avec au moins une cannelure périphérique.

10. Ensemble de valve selon l'une des revendications 1 à 8, **caractérisé en ce que** l'élément de fixation (20) est réalisé et/ou disposé de manière désolidarisable avec le corps de valve (2), en particulier en coopérant, par une liaison à interaction de forces et/ou une liaison à ajustement de forme, avec un filetage extérieur de corps de valve.

11. Ensemble de valve selon l'une des revendications précédentes, **caractérisé en ce que** l'élément profilé (15) présente plusieurs éléments de fixation (20), espacés en direction périphérique.

12. Ensemble de valve selon la revendication 11, **caractérisé en ce que** les éléments de fixation (20) sont répartis régulièrement en direction périphérique.

13. Ensemble de valve selon l'une des revendications précédentes, **caractérisé en ce que** l'élément profilé (15) est réalisé en métal, en particulier sous forme de pièce obtenue par estampage-pliage.

14. Ensemble de valve selon l'une des revendications précédentes, **caractérisé en ce que** le corps de valve (2) forme une antenne du dispositif de mesure (3), pour la transmission de signaux à un dispositif récepteur disposé à distance du pneu rempli de gaz, et **en ce que** l'élément profilé (15) forme un élément de mise en contact, pour la mise en contact, assurant un guidage de signaux, d'une électronique de dispositif de mesure (8), disposé sur une platine (7), avec le corps de valve (2).

15. Ensemble de valve selon la revendication 13, **caractérisé en ce que** l'élément de mise en contact est réalisé sous forme d'au moins une broche de contact (24).

16. Kit pour un ensemble de valve selon l'une des revendications précédentes, avec un corps de valve (2), pour remplir et vider un pneu de véhicule et avec un dispositif de mesure (3), pour mesurer la pression de pneu de véhicule, dans le pneu de véhicule, ainsi qu'avec un moyen de sécurité, présentant un élément profilé (15) avec un élément de fixation (20) pour agir sur le corps de valve (2),
**caractérisé en ce que**
l'élément de fixation (20) étant réalisé sous forme d'élément formant griffe, faisant saillie radialement par rapport au corps de valve (2), susceptible d'être agrippé à une surface du corps de valve (2).

17. Kit selon la revendication 16, **caractérisé en ce que** l'élément profilé est susceptible d'être disposé en prenant appui en direction axiale sur le dispositif de mesure, en particulier sur son boîtier (6).

18. Kit selon l'une des revendications 16 ou 17, **caractérisé en ce que** le corps de valve (2) est susceptible d'être guidé en direction axiale, à l'encontre du sens de traction (Z), au moyen de l'élément profilé (15), et le dispositif de mesure (3) est maintenu à sa position axiale par l'élément de fixation (20) de l'élément profilé (15), lors d'une sollicitation par un effort de traction, dans le sens de traction (2).

19. Utilisation d'un kit selon l'une des revendications 16 à 18, pour le montage d'un ensemble de valve (1).
